Europäisches Patentamt

European Patent Office

Office européen des brevets

(11) Publication number: **0 377 043**
**A1**

# (12) EUROPEAN PATENT APPLICATION
## published in accordance with Art. 158(3) EPC

(21) Application number: **89903808.7**

(51) Int. Cl.⁵: **G05B 19/04**

(22) Date of filing: **23.03.89**

(86) International application number:
**PCT/JP89/00311**

(87) International publication number:
**WO 89/10586 (02.11.89 89/26)**

(30) Priority: **22.04.88 JP 99470/88**

(43) Date of publication of application:
**11.07.90 Bulletin 90/28**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **KIYA, Nobuyuki Yokokawacho**
**Jutaku 13-106**
**108, Yokokawacho Hachioji-shi**
**Tokyo 193(JP)**
Inventor: **ONISHI, Yasushi Fanuc Mansion**
**Harimomi 8-304**
**3511-1, Shibokusa Oshinomura,**
**Minamitsuru-gun**
**Yamanashi 401-05(JP)**

(74) Representative: **Brunner, Michael John et al**
**GILL JENNINGS & EVERY 53-64 Chancery**
**Lane**
**London WC2A 1HN(GB)**

(54) **PROGRAM DISPLAY SYSTEM OF A PC.**

(57) A PC (programmable controller) which inputs and displays a user programm in mnemonic language. Content of an accumulator (11) before and after the execution of an instruction and a signal condition referred to by the instruction are displayed on a display device (71) together with an instruction word for every step of instruction of the user program (5). Therefore, data necessary for debugging are displayed through simple operation and debugging is facilitated.

FIG.1

# DESCRIPTION

## PC PROGRAM DISPLAY METHOD

### Technical Field

The present invention relates to a user program display method for a PC (program controller), and more particularly, to a PC program display method in which the state of execution of an operation is displayed together with an instruction, thereby facilitating the development and maintenance of a program.

### Background Art

When debugging a PC program, whether or not an operation is correctly executed is conventionally examined by surveying the states of required input and output signals with reference to a program list, using a programming monitor unit with a liquid-crystal display or the like, to check that the program is operating in accordance with design.

A conventional PC apparatus can monitor only the state of the input signals before the operation and the state of the output signals as a result of the operation, and cannot examine the content of an accumulator as an interim result of the operation. Further, a cumbersome operation is needed to selectively display necessary signals, among many other input and output signals, and the monitor unit must be operated with reference to a program list on which instructions are printed.

Disclosure of the Invention

The present invention has been created in consideration of these circumstances, and an object thereof is to provide a PC program display method in which the state of execution of an operation is displayed together with an instruction, thereby facilitating the development and maintenance of a program.

To solve the above problem, according to the present invention, there is provided a program display method for a PC (programmable controller) in which a user program is entered and displayed in mnemonic language, the method being characterized by displaying the contents of an accumulator before and after the execution of an instruction and a signal state referred to by the instruction, as well as instruction words, at each instruction step.

A processor executes a monitor program in parallel with the execution of the user program, using a multitask method, and in the execution of the monitor program, the user program is retrieved forward from a program step designated by an operator to determine a step at which the operation is started, whereupon the instruction is interpreted and executed step by step.

During the interpreting and execution at each step, it is determined whether the step number coincides with the step number designated for indication by the operator. If the step numbers coincide, the instruction, the states of the input and output signals required in accordance with the content of the instruction, and the contents of the accumulator before and after the execution of the instruction, are displayed.


Brief Description of the Drawings

Fig. 1 is a block diagram of the hardware of a PC apparatus for effecting the present invention;

Fig. 2 is a diagram showing the details of an accumulator;

Fig. 3 is a diagram showing an example of a user program in the form of a ladder diagram;

Fig. 4 is a diagram showing an example of the user program of the ladder-diagram type of Fig. 3, expressed in mnemonic language;

Fig. 5 is a diagram showing part of the mnemonically displayed instruction of Fig. 4 in accordance with a display method of the present invention;

Fig. 6 shows a detailed layout of the logical operation display of Fig. 5; and

Fig. 7 is flowchart of a monitor program.


Best Mode of Carrying Out the Invention

One embodiment of the present invention will now be described with reference to the drawings.

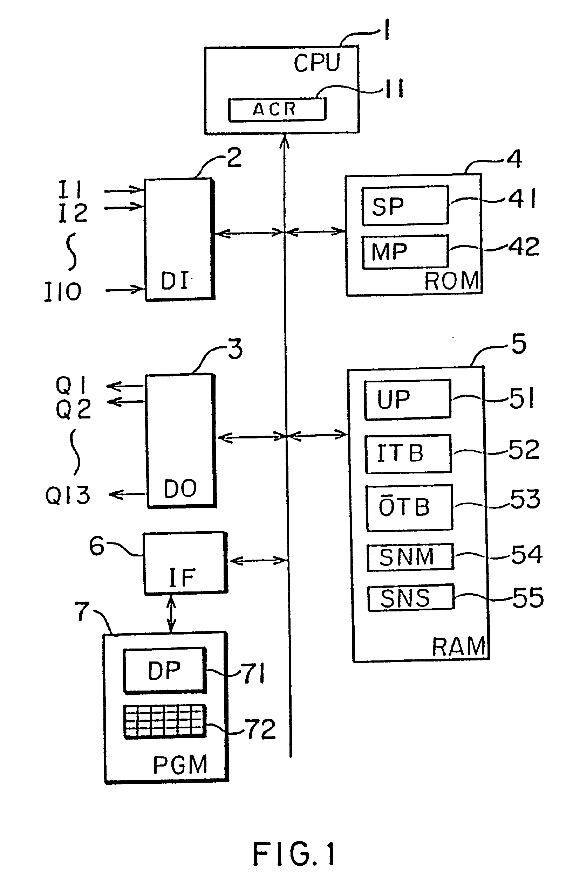

Figure 1 is a block diagram of the hardware of a PC apparatus for effecting the present invention, wherein 1 denotes a processor having an accumulator 11 for executing a user program.

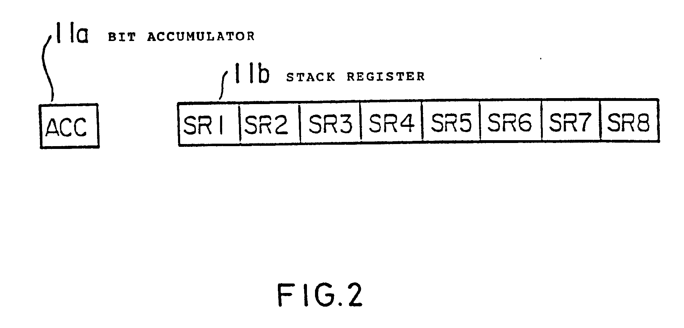

Figure 2 shows the details of the accumulator 11, which is composed of a bit accumulator 11a having a one-bit capacity and a several-bit stack register 11b, and logical operations described in the user program are executed by these elements 11a and 11b.

Turning again to Fig. 1, 2 denotes an input circuit which is supplied with input signals I1 to I10, etc., and 3 denotes an output circuit which delivers output signals Q1 to Q13, etc.

Numeral 4 denotes a ROM in which is stored a system program 41 and a monitor program 42, and 5 denotes a RAM in which is stored a user program 51, an input signal table 52, an output signal table 53, a display step number register 54, and an execution step number register 55, etc.

Numeral 6 denotes an interface for a programming monitor unit connected to a programming monitor unit 7, 71 denotes a display device of the programming monitor unit 7, which display device 71 can usually display one or two lines of a mnemonic instruction, and 72 denotes a keyboard.

The input user program 51 is executed in accordance with the system program 41. The system program 41 carries out a parallel processing of the user program 51 and the monitor program 42, using the multitask method, and further, reads the input signals from the input circuit 2, stores them in the input signal table 52, and delivers the output signals stored in the output signal table 53 to the output circuit 3.

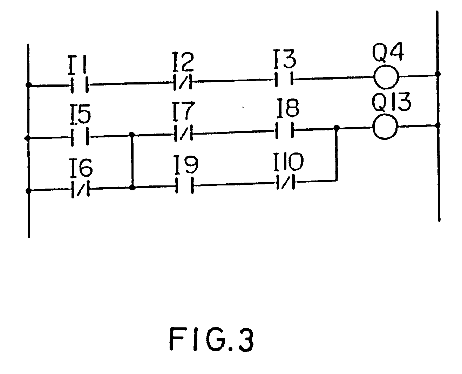

Figure 3 is a diagram showing an example of the user program in the form of a ladder diagram. When the same program is entered or displayed by the programming monitor unit 7 shown in Fig. 1, the mnemonic system is used for this entry or display, since the display screen is small.

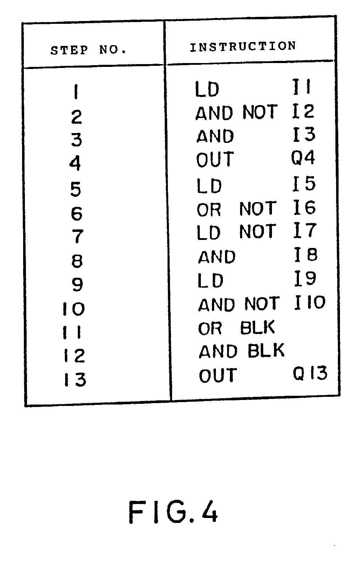

Figure 4 shows an example of the user program of the ladder-diagram type of Fig. 3, expressed in mnemonic language. Namely, in a programming monitor unit provided with a display device having a capacity for only one or two lines of the instruction, the entry or display is carried out step by step in accordance with the mnemonic system.

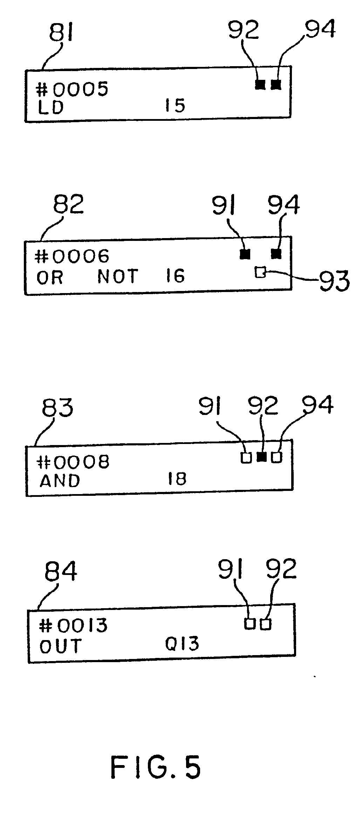

Figure 5 is a diagram showing part of the mnemonically displayed instruction of Fig. 4 in accordance with a display method of the present invention. A step number of the mnemonic instruction, the instruction, and the input signal are displayed on the left-hand side of the screen, and the contents of the accumulator before and after the execution of the instruction and the states of the input and output signals referred to by the instruction are displayed on the right-hand side. The format of the state display on the right-hand side of the screen varies depending on the type of operation, which will be described in detail later.

Numeral 81 designates a load instruction corresponding to step number 5 of Fig. 4. A black square 92 indicates that the loaded input signal I5 is on. When the accumulator 11 is loaded with the input signals, a square 94 indicating the content of the accumulator 11 is on, as indicated in black in the figure.

Numeral 82 designates an OR/NOT instruction corresponding to step number 6 of Fig. 4. A black square 91 indicates that the state of the accumulator 11 before the operation is on, and a white square 93 indicates that an input signal I6 subjected to an OR operation by the accumulator 11 is on, and that an inverted signal thereof is off. The square 94 indicates that the result of a logical operation is on.

Numeral 83 designates an AND instruction corresponding to step number 8 of Fig. 4. The white square 91 indicates that the state of the accumulator 11 before the operation is off, and the black square 92 indicates that an input signal I8 subjected to an AND operation by the accumulator 11 is on. The white square 94 indicates that the result of a logical operation is off.

Numeral 84 designates an OUT instruction corresponding to a step number 13 of Fig. 4. The white square 91 indicates that the state of the accumulator 11, i.e., the operation result, is off, and the white square 92 indicates that the output signal is off.

Accordingly, the state of the accumulator before an operation and the content of the accumulator after an operation, such as subjecting the input signal to a logical operation by the accumulator, are indicated by the squares, so that an operator can immediately understand the flow of the logical operations.

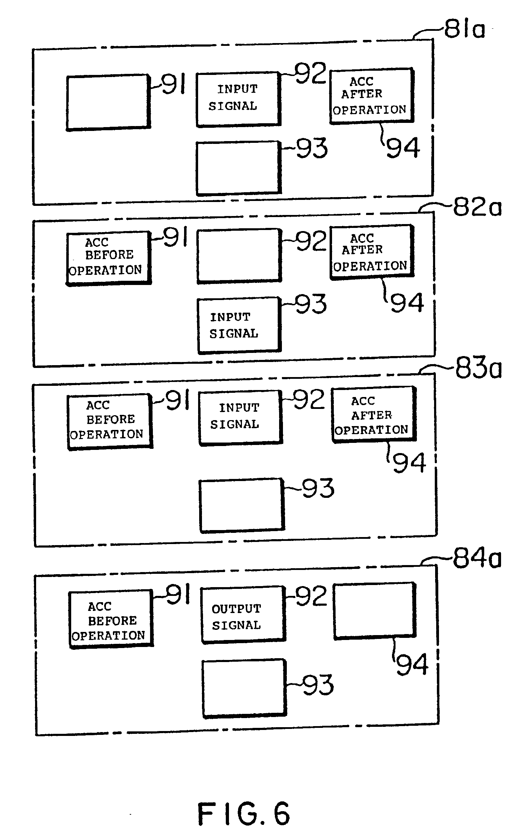

Figure 6 shows a detailed layout of the logical operation display of Fig. 5. Indications 81a, 82a, 83a and 84a correspond to the instruction indications 81, 82, 83 and 84, respectively, of Fig. 5.

The display format is changed depending on the type of operation, because the bits in the accumulator and the input and output signals used in the operations vary for each operation.

Numeral 81a designates the case of an LD instruction whereby the accumulator reads the input signal. In this case, a state 92 of the input signal referred to and the content of the accumulator 94 after the execution of the operation are displayed at the illustrated positions. The square 91, which indicates the state of the accumulator before the execution of the operation, and the square 93, which indicates the content of the stack register 11b, are not displayed because they are unnecessary. Here the accumulator and the input signal are designated by a white or black square. The white square indicates that the signal is off, and the black square indicates that the signal is on.

Numeral 82a designates an OR operation, whereby the square 91 indicating the content of the accumulator before the operation, the square 93 indicating the state of the input signal, and the square 94 indicating the content of the accumulator after the operation are displayed. In the case of the OR operation, in particular, operation signals are displayed in a parallel relationship, taking into consideration that the data is displayed in a parallel relationship as in the ladder diagram.

Numeral 83a designates an AND operation, so that the square 91 indicating the content of the accumulator before the operation, the square 92 indicating the state of the input signal, and the square 94 indicating the content of the accumulator after the operation, are displayed. In the case of the AND operation, in particular, operation signals are displayed linearly, taking into consideration that the data is displayed in series as in the ladder diagram.

Numeral 84a designates an OUT instruction for the delivery of the operation result, whereby only the square 91 indicating the state of the accumulator before the operation and the square 92 indicating the output signal are displayed.

Because the display format is thus changed in accordance with the state of operation, the operator can immediately understand the state of the operation.

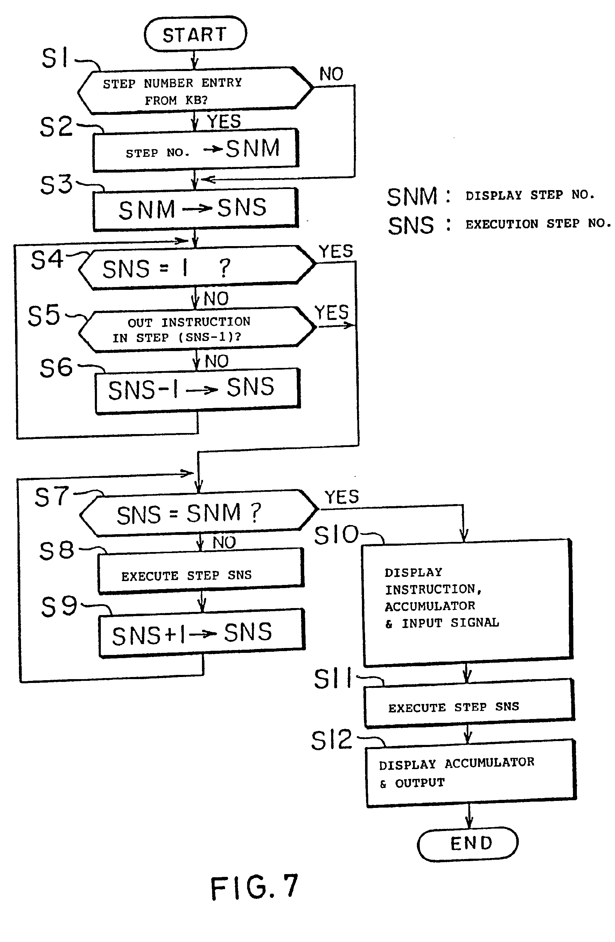

Figure 7 shows a flow chart of the monitor program. In Fig. 7, numerals prefixed by a symbol S indicate step numbers.

[S1] It is determined whether a step number has been entered through the keyboard. If yes, the program proceeds to S2, but if no, the program proceeds to S3.

[S2] The entered step number is specified as a display step number SNM.

[S3] The display step number SNM is specified as an execution step number SNS.

[S4] If the execution step number SNS is 1, the program proceeds to S7, but if not, the program proceeds to S5.

[S5] It is determined whether the instruction at the step number lower than the execution step number by 1 is an OUT instruction. If the instruction is an OUT instruction, the program proceeds to S7, but if not, the program proceeds to S6.

[S6] One (1) is subtracted from the execution step number SNS, whereupon the program returns to S4.

Namely, the steps S4 to S6 are processes for obtaining the step number of the first instruction in an operation containing the step SNM, by means of SNS, to obtain the content of the accumulator.

[S7] It is determined whether the execution step number SNS and the display step number SNM coincide. If they coincide, the program proceeds to S10, but if not, the program proceeds to S8.

[S8] The step corresponding to the execution step number SNS is executed.

[S9] One (1) is added to the execution step number SNS, whereupon the program returns to S7.

Namely, the steps S7 to S9 are processes for executing instructions up to the content of the display step number register.

[S10] Since the execution step number SNS and the display step number SNM coincide, the step number, instruction, accumulator content, an input signal, etc., are displayed. The display format is shown in Figs. 5 and 6.

[S11] An instruction corresponding to the execution step number SNS is executed.

[S12] The accumulator content and output, etc., are displayed.

Namely, the content of the accumulator before the operation, the input signal, and the content of the accumulator after the operation are indicated by the squares for each instruction, so that the operator can immediately understand the content of the operation, and accordingly, the debugging of the user program and the like is made easier.

Although the squares are used for the display in the above description, the display format is not limited to such a configuration, and circles or other shapes may be used for that display.

According to the present invention, as described above, the states of the input and output signals referred to by the instruction and the contents of the accumulator before and after the operation, as well as a mnemonic expression of the instruction, are indicated on the display device of the programming monitor unit at each step of the user program. Accordingly, information necessary for the debugging can be displayed at a time by a simple operation, whereby the operator is relieved of much of the burden of debugging the user program, and thus the working efficiency is improved.

CLAIMS

1.  A program display method for a PC (programmable controller) in which a user program is entered and displayed in mnemonic language, said method being characterized by displaying a content of an accumulator before and after an execution of an instruction and a signal state referred to by the instruction, as well as instruction words, at each step of the instruction.

2.  A program display method according to claim 1, wherein on and off states of a display of said accumulator and said signal state are discriminated by using symbolic marks.

3.  A program display method according to claim 1, wherein only those among said accumulator content and said signal state which are used in an operation are displayed in accordance with a type of instruction.

4.  A program display method according to claim 1, wherein a discrimination between a series circuit (AND operation) and a parallel circuit (OR operation) is made in accordance with whether the display is arranged from right to left or in two lines from top to bottom.

FIG.1

11a BIT ACCUMULATOR

11b STACK REGISTER

| ACC |

| SR1 | SR2 | SR3 | SR4 | SR5 | SR6 | SR7 | SR8 |

FIG.2

FIG.3

| STEP NO. | INSTRUCTION |
|----------|-------------|
| 1 | LD        I1 |
| 2 | AND NOT   I2 |
| 3 | AND       I3 |
| 4 | OUT       Q4 |
| 5 | LD        I5 |
| 6 | OR  NOT   I6 |
| 7 | LD  NOT   I7 |
| 8 | AND       I8 |
| 9 | LD        I9 |
| 10 | AND NOT  I10 |
| 11 | OR  BLK |
| 12 | AND BLK |
| 13 | OUT       Q13 |

# FIG.4

81

92    94

```
#0005
LD          I5
```

82

91    94

```
#0006
OR    NOT    I6      □——93
```

83

91  92  94

```
#0008                □■□
AND          I8
```

84

91  92

```
#0013                □□
OUT          Q13
```

FIG.5

FIG. 6

START

S1 — STEP NUMBER ENTRY FROM KB? —— NO

↓ YES

S2 — STEP NO. → SNM

S3 — SNM → SNS

SNM : DISPLAY STEP NO.
SNS : EXECUTION STEP NO.

S4 — SNS = 1 ? —— YES

↓ NO

S5 — OUT INSTRUCTION IN STEP (SNS-1)? —— YES →

↓ NO

S6 — SNS-1 → SNS

S7 — SNS = SNM ? —— YES

↓ NO

S8 — EXECUTE STEP SNS

S9 — SNS+1 → SNS

S10 — DISPLAY INSTRUCTION, ACCUMULATOR & INPUT SIGNAL

S11 — EXECUTE STEP SNS

S12 — DISPLAY ACCUMULATOR & OUTPUT

END

FIG. 7

# INTERNATIONAL SEARCH REPORT

International Application No PCT/JP89/00311

## I. CLASSIFICATION OF SUBJECT MATTER (if several classification symbols apply, indicate all) [6]

According to International Patent Classification (IPC) or to both National Classification and IPC

Int.Cl$^4$ G05B19/04

## II. FIELDS SEARCHED

### Minimum Documentation Searched [7]

| Classification System | Classification Symbols |
|---|---|
| IPC | G05B19/04, G05B23/02 |

### Documentation Searched other than Minimum Documentation to the Extent that such Documents are Included in the Fields Searched [8]

| | |
|---|---|
| Jitsuyo Shinan Koho | 1932 — 1989 |
| Kokai Jitsuyo Shinan Koho | 1971 — 1989 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| X | JP, A, 54-152775 (Sharp Corporation) 1 December 1979 (01. 12. 79) (Family: none) | 1 - 4 |
| X | JP, A, 57-60411 (Toyoda Machine Works, Ltd.) 12 April 1982 (12. 04. 82) & US, A, 4425630 | 1 - 4 |
| Y | JP, A, 57-89109 (Toyoda Machine Works, Ltd.) 3 June 1982 (03. 06. 82) (Family: none) | 1 - 4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| June 14, 1989 (14. 06. 89) | July 3, 1989 (03. 07. 89) |
| International Searching Authority | Signature of Authorized Officer |
| Japanese Patent Office | |

Form PCT/ISA/210 (second sheet) (January 1985)